# EUROPEAN PATENT APPLICATION

(11) **EP 2 474 756 A2**
(43) Date of publication of application: **11.07.2012**
(21) Application number: 12150126.6
(22) Date of filing: 04.01.2012
(51) Int. Cl.: F16G 11/14

(54) **Cord fastener**

(30) Priority: 06.01.2011 CN 201120014918 U
(71) Applicant: Duraflex Hong Kong Limited, Hong Kong (CN)
(72) Inventor: Xu, Yi Gang, Guangzhou (CN)
(74) Representative: Bonvicini, Davide

(57) **Abstract**

The present invention relates to a cord fastener, which is used in cooperation with a cord and for fixing rod-type or columnar components. The cord fastener comprises a main body part having a first surface for leaning against the rod-type or columnar components, and a part for fixing a cord formed at a first end of the main body part and used for fixing a first end of the cord. The main body part has a first aperture for receiving a cord for the passing of the cord and a slit for clamping a cord communicating with the first aperture for receiving a cord. Wherein, the first aperture for receiving a cord and the slit for clamping a cord penetrate through the first surface. Since the cord fastener of present invention is a single part, it is simple in structure and low in cost. Besides, the cord fastener in the present invention can be operated by a single hand, thus being convenient and efficient for usage as well.

## Description

### FIELD OF THE INVENTION

The present invention relates to an adjusting device for a cord, more particularly, to a cord fastener for fixing a rod-type or columnar components like walking stick, trekker pole or pickel and so on.

### BACKGROUND OF THE INVENTION

During many outdoor activities including mountain climbing, exploration and scientific investigation etc., equipments such as a walking stick and an axe (a pickel) etc. are often used. When carrying these equipments, their columnar components, i.e. the knob of the walking stick and the handle of the axe, are generally fixed onto the backpack through a cord or the combination of a cord and a fastener. In this case, it is required to perform complex winding steps to the cord during the fixing process and complex disassembling steps to the cord during the removing process, which brings great inconvenience to the usage. At present, there are some cord fasteners for fixing the walking stick. However, those often comprise a plurality of components and have relatively high cost. Moreover, the structures of those cord fasteners are relatively simple. That is, they cannot allow for all functions including hooking, clipping and releasing the cord simultaneously. Meanwhile, their operation is quite inconvenient since both hands are needed to operate them.

### SUMMARY OF THE INVENTION

The objective of the present invention is to provide a cord fastener with a simple structure and low cost, aiming at the drawbacks that the cord fasteners have too many components and too high cost in the prior art.

According to an aspect, a cord fastener used in cooperation with a cord and for fixing rod-type or columnar components is provided, comprising a main body part having a first surface for leaning against the rod-type or columnar components, and a part for fixing a cord formed at a first end of the main body part and used for fixing a first end of the cord; wherein the main body part has a first aperture for receiving a cord for a passing of the cord and a slit for clamping a cord communicating with the first aperture for receiving a cord, wherein the first aperture for receiving a cord and the slit for clamping a cord penetrate through the first surface.

In the cord fastener of the present invention, the first surface is a curved surface that is adaptive with the rod-type or columnar components.

In the cord fastener of the present invention, the part for fixing a cord is a hook part, an opening of which faces a side opposite to the first surface.

In the cord fastener of the present invention, a locating projection on a same side as the first surface is arranged at the first end.

In the cord fastener of the present invention, two locating projections are provided and both the locating projections are parallelly arranged with each other; and an aperture for reducing material is arranged between the two locating projections.

In the cord fastener of the present invention, the part for fixing a cord is an aperture for receiving a webbing arranged at the first end.

In the cord fastener of the present invention, the cord fastener further comprises a tail part for clipping formed at a second end of the main body part.

In the cord fastener of the present invention, the tail part for clipping is provided with a second aperture for receiving a cord.

In the cord fastener of the present invention, a structure for avoidance of slippage is arranged on a surface of the tail part for clipping.

In the cord fastener of the present invention, the structure for avoidance of slippage is a strip for avoidance of slippage or lug points for avoidance of slippage arranged on the surface of the tail part for clipping.

When implementing the cord fastener of the present invention, the following advantageous effect can be achieved: the cord fastener in the present invention is simple in structure and low in cost since it is a single part. Besides, the cord fastener in the present invention can be operated by a single hand, thus being convenient and efficient for usage as well.

### BRIEF DESCRIPTION OF THE DRAWINGS

The present invention will be further described with reference to the accompanying drawings and embodiments in the following. In the Figures:
Figure 1 is a diagram for the cord fastener of the first embodiment in the present invention;
Figure 2 is a diagram in another view for the cord fastener of the first embodiment in the present invention;
Figure 3 to Figure 6 are the diagrams illustrating that the rod-type or columnar components are fixed through the cord fastener of the first embodiment in the present invention;
Figure 7 to Figure 8 are the diagrams illustrating that the cord fastener of the first embodiment is disassembled from the rod-type or columnar components in the present invention;
Figure 9 is a diagram for the cord fastener of the second embodiment in the present invention.

### DETAILED DESCRIPTION OF THE PREFERRED EMBODIMENT

To make the technical feature, objective and effect of the present invention be understood more clearly, now the specific implementation of the present invention is described in detail with reference to the accompanying drawings.

The cord fastener according to present invention is in cooperation with a cord to adjust the cord and fix the rod-type or columnar components of such equipments including a walking stick, a trekker pole and an axe helve etc..

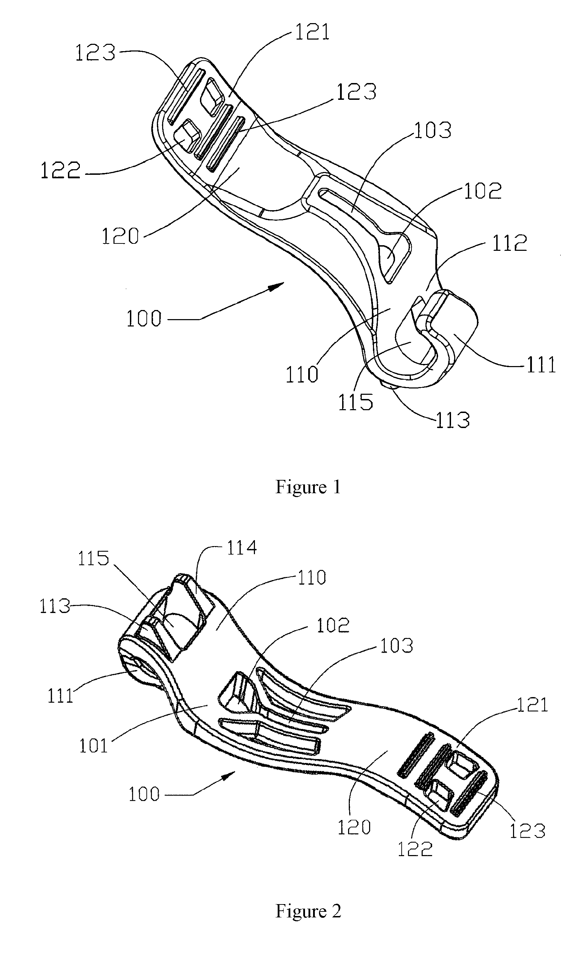

As shown in Figure 1 and 2, it is the first embodiment for the cord fastener of the present invention. In the embodiment, the cord fastener comprises a main body part 100 having a first surface 101 for leaning against the rod-type or columnar components, and a part for fixing a cord which is formed at a first end 110 of the main body part 100 and used for fixing a first end of the cord. The main body part 100 has a first aperture for receiving a cord 102 for the passing of the cord and a slit for clamping a cord 103 communicating with the first aperture for receiving a cord 102. The first aperture for receiving a cord 102 and the slit for clamping a cord 103 penetrate through the first surface 101. In order to make the cord fastener cooperate with the rod-type or columnar components better, the first surface 100 is a curved surface that is adaptive with the rod-type or columnar components. In this way, the attachment between the first surface 100 and the rod-type or columnar components is tighter.

In the present embodiment, the part for fixing a cord formed at the first end 110 of the main body part 100 is a hook part 111, the opening 112 of which faces the side opposite to the first surface 101. In the present embodiment, in order to fix the rod-type or columnar components better, two locating projections 113, 114 on the same side as the first surface 101 are arranged at the first end 110. During the fixing of the rod-type or columnar components, the two locating projections 113, 114 press against the rod-type or columnar components to play a certain role of limiting. Furthermore, an aperture for reducing material 115 is arranged between the two locating projections 113, 114, which can reduce the weight of the product and improve the appearance.

The cord fastener further comprises a tail part for clipping 121 formed at a second end 120 of the main body part 100. Since the tail part for clipping 121 is gripped by fingers during the operation of the cord fastener, two apertures for receiving a cord 122 are arranged on the tail part for clipping 121 so that the tail part for clipping 121 can further be provided with a short length of cord. Besides, the surface of the tail part for clipping 121 is provided with a structure for avoidance of slippage so as to facilitate the fingers to grip the tail part for clipping 121. In the present embodiment, the structure for avoidance of slippage is a strip for avoidance of slippage 123 arranged on the surface of the tail part for clipping 121. Actually, it can be any other appropriate structure for avoidance of slippages such as lug points for avoidance of slippage.

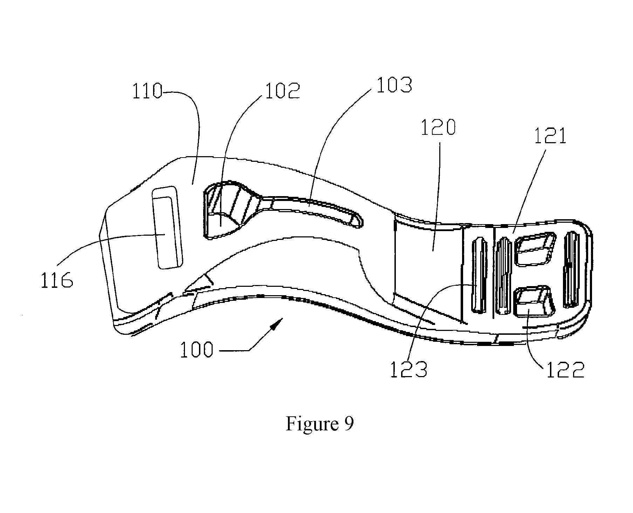

As shown in Figure 9, it is the second embodiment for the cord fastener of the present invention. Different from the first embodiment, the part for fixing a cord formed at the first end 110 of the main body part 100 is an aperture for receiving a webbing 116. The cord or webbing can be passed through the aperture for receiving a webbing 116 to be fixed thereafter. Since the main body part 100 itself and the tail part for clipping 121 formed at the second end 120 of the main body part 100 according to the present cord fastener are the same as those in the first embodiment, it is unnecessary to repeat herein for conciseness.

While the structure of the cord fastener in the present invention has been illustrated above, how the cord fastener in the present invention works is described with reference to the accompanying drawings below.

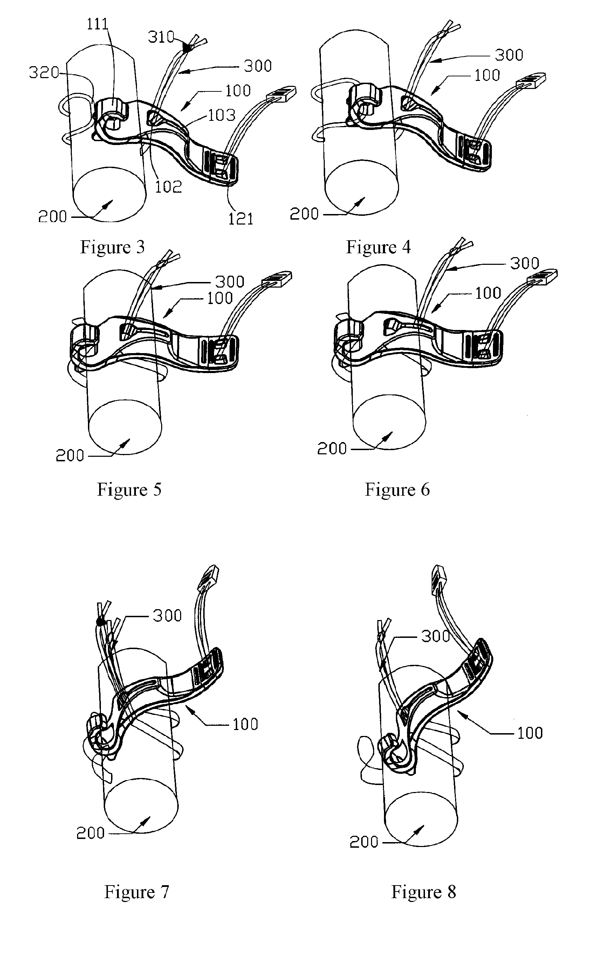

As shown in Figure 3 to Figure 6, they are the diagrams illustrating that the rod-type or columnar components are fixed through the cord fastener of the first embodiment in the present invention. In Figure 3, the tail end 310 of the cord 300 is tied or fixed onto the tail part for clipping 121. After that, the cord passes through the first aperture for receiving a cord 102 and surrounds the columnar component 200. The tail end 310 of the cord 300 can also be fixed onto the backpack. In Figure 4, the first end 320 of the cord 300 hooks the hook part 111 so that a closed path is formed and the columnar component 200 is surrounded between the cord 300 and the main body part 100. In Figure 5, when pulling the tail end 310 of the cord 300, the main body part 100 gets close to the columnar component 200 quickly and the first surface 101 of the main body part 100 clings onto the columnar component 200. In Figure 6, after the main body part 100 has clung onto the columnar component 200, the cord 300 is pulled towards the direction of slit for clamping a cord 103 so that the cord 300 gets stunk in the slit for clamping a cord 103, then the cord is clamped and fastened therein. In this way, the columnar component 200 is fixed firmly.

As shown in Figure 7 to Figure 8, they are the diagrams illustrating that the cord fastener of the first embodiment is disassembled from the rod-type or columnar components in the present invention. In Figure 7, the tail part for clipping 121 is pulled to make the cord come off from the slit for clamping a cord 103 and remain in the position of the first aperture for receiving a cord 102, in which case the cord 300 becomes loose. In Figure 8, the tail part for clipping 121 is operated to make the cord come off from the hook part 111. Immediately, the columnar component 200 can come off.

In the present invention, the operation mode of the second embodiment is similar to that of the first embodiment, which is unnecessary to repeat herein for conciseness.

The cord fastener in the present invention is simple in structure. Since it is a single part, it is simple in structure and low in cost. Besides, the cord fastener in the present utility can be operated by a single hand, thus being convenient and efficient for usage as well.

While the embodiments of the present invention are described with reference to the accompanying drawings above, the present invention is not limited to the above-mentioned specific implementations. In fact, the above-mentioned specific implementations are intended to be exemplary not to be limiting. In the inspiration of the present invention, those ordinary skills in the art can also make many modifications without breaking away from the subject of the present invention and the protection scope of the claims. All these modifications belong to the protection of the present invention.

## Claims

1. A cord fastener used in cooperation with a cord and for fixing rod-type or columnar components, comprising a main body part having a first surface for leaning against the rod-type or columnar components, and a part for fixing a cord formed at a first end of the main body part and used for fixing a first end of the cord; wherein the main body part has a first aperture for receiving a cord for a passing of the cord and a slit for clamping a cord communicating with the first aperture for receiving a cord, wherein the first aperture for receiving a cord and the slit for clamping a cord penetrate through the first surface.

2. The cord fastener according to claim 1, wherein the first surface is a curved surface that is adaptive with the rod-type or columnar components.

3. The cord fastener according to claim 2, wherein the part for fixing a cord is a hook part, an opening of which faces a side opposite to the first surface.

4. The cord fastener according to claim 3, wherein a locating projection on a same side as the first surface is arranged at the first end.

5. The cord fastener according to claim 4, wherein two locating projections are provided and both the locating projections are parallelly arranged with each other; and an aperture for reducing material is arranged between the two locating projections.

6. The cord fastener according to claim 1, wherein the part for fixing a cord is an aperture for receiving a webbing arranged at the first end.

7. The cord fastener according to any of claims 1 to 6, wherein the cord fastener further comprises a tail part for clipping formed at a second end of the main body part.

8. The cord fastener according to claim 7, wherein the tail part for clipping is provided with a second aperture for receiving a cord.

9. The cord fastener according to claim 7, wherein a structure for avoidance of slippage is arranged on a surface of the tail part for clipping.

10. The cord fastener according to claim 9, wherein the structure for avoidance of slippage is a strip for avoidance of slippage or lug points for avoidance of slippage arranged on the surface of the tail part for clipping.
